## Europäisches Patentamt
## European Patent Office
## Office européen des brevets

(11) Publication number: **0 169 733**
**B1**

# EUROPEAN PATENT SPECIFICATION

(45) Date of publication of patent specification: **11.10.89**

(51) Int. Cl.⁴: **B 60 R 1/04**

(21) Application number: **85305245.4**

(22) Date of filing: **23.07.85**

(54) A rear view mirror assembly.

(30) Priority: 23.07.84 JP 111268/84
23.07.84 JP 111269/84
23.07.84 JP 111270/84
24.08.84 JP 128089/84

(43) Date of publication of application:
29.01.86 Bulletin 86/05

(45) Publication of the grant of the patent:
11.10.89 Bulletin 89/41

(84) Designated Contracting States:
DE FR GB

(56) References cited:
WO-A-83/02590
DE-A-2 219 500
DE-U-7 407 610
US-A-3 928 894
US-A-4 254 931

(73) Proprietor: **TOYOTA JIDOSHA KABUSHIKI KAISHA**
**1, Toyota-cho Toyota-shi**
**Aichi-ken 471 (JP)**

(72) Inventor: **Ohyama, Yasuo**
**797 Banchi 1 Kiriyama Shiga-cho**
**Toyota-shi Aichi-ken (JP)**

(74) Representative: **Ben-Nathan, Laurence Albert et al**
**Urquhart-Dykes & Lord 91 Wimpole Street**
**London W1M 8AH (GB)**

Courier Press, Leamington Spa, England.

## Description

The present invention relates to a rear view mirror assembly of a vehicle, and more particularly to a connecting device for installing the rear view mirror assembly on a body member of a vehicle.

An adjustable device disposed between a base member and a support arm of a rear view mirror is disclosed in Japanese Utility Model Laid-open No. Showa 58-24595. In this Japanese Utility Model Laid-open No. Showa 58-24595, the rear view mirror includes a support arm, a spring and a base member. The base member is cemented on an interior of a windshield, and includes a bar and a mounting portion. The spring includes a hooked end and a rear edge, and the hooked end being mounted on the bar of the base member. The rear edge of the spring is disposed on the mounting portion, and the support arm is fixed on the spring by a bolt.

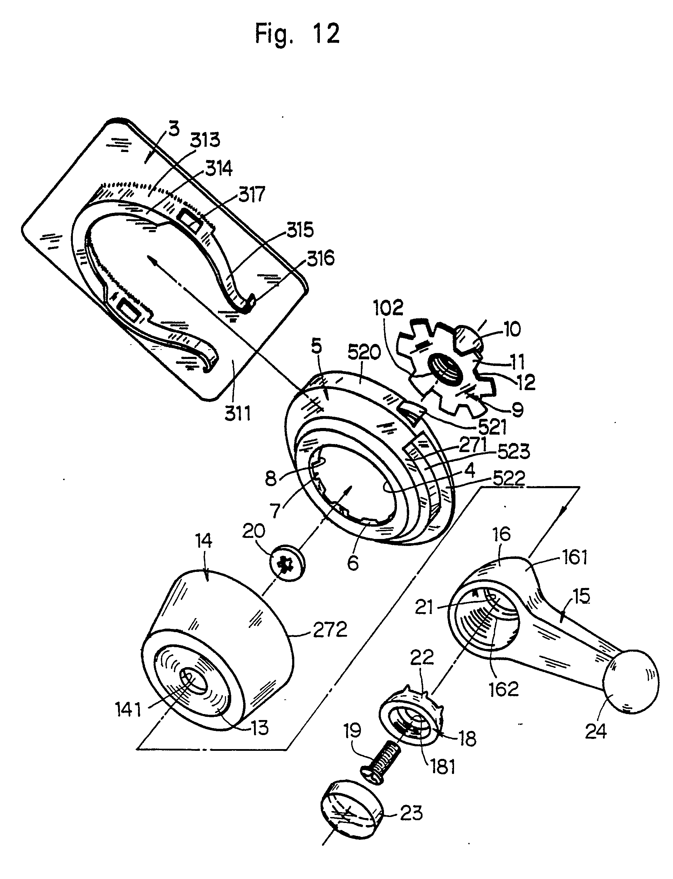

Further, the base member includes a slanted surface on a bottom surface thereof and the support arm includes an incline on an end thereof. As shown in Figure 12 of Japanese Utility Model Laid-open No. Showa 58-24595, when a force "Pc" is applied to the rear view mirror, the support arm is moved downwardly and breaks away, because the incline of the support arm and the slanted surface of the base member prevent the support arm from resisting the force "Pc".

Furthermore, this rear view mirror assembly includes a spherical ball portion disposed on an opposite end of the support arm, the ball portion being received within a socket portion of the rear view mirror.

Therefore, this rear view mirror can be adjusted to its angle through the spherical ball portion and the socket portion of the rear view mirror. However, the range of the adjustment of this rear view mirror is rather small, because this rear view mirror includes only one adjustment device. In addition, it is not easy for a worker to install the components of the rear view mirror because the worker must install the nut of the spring into the hole of the support arm and then fix the support arm on the spring with a bolt. Such installment procedures are cumbersome and complex.

Another adjustment device disposed between a windshield header and a support arm of a rear view mirror is disclosed in U.S. Patent No. 3 575 375.

In this U.S. Patent 3 575 375, the rear view mirror assembly includes a first adjustment device and a second adjustment device. The first adjustment device includes a clamping plate and a spherical ball on one end of the support arm. The second adjustment device includes a stud adjustably mounted on an opposite end of the support arm. The rear view mirror is mounted on the stud. Thus, this rear view mirror assembly can be adjusted to a wide range of angular positions by the first adjustment device and the second adjustment device.

Further, the ball on the support arm has a V-shaped notch so that the support arm can break away from the clamping plate when an excessive force is applied to the rear view mirror by rotating the support arm about the spherical ball. However, during assembly, it is necessary for a worker to pay attention to the desired distance between a mounting bracket for the entire assembly and the clamping plate, because the support arm cannot break away when a less than desired distance is defined between the mounting bracket and the clamping plate. It is further noted that the support arm cannot mount on the windshield header when a greater than desired distance is defined between a mounting bracket and the clamping plate. Thus, the device disclosed in the US—A—3575375 patent is relatively difficult to assemble.

A rear view mirror having an adjustment device which is disposed between a body member of a vehicle and the rear view mirror is disclosed in U.S. Patent 3471115. This adjustment device includes a semi-spherical socket portion and a spring. The semi-spherical socket portion engages frictionally with a ball end of a support arm for the rear view mirror, and a spring biases the ball end into engagement with the semi-spherical socket portion. The rear view mirror can move universally about the adjustment device when a force is applied thereto. However, the rear view mirror cannot break away from its mounting bracket under an excessive force because the support arm of the rear view mirror is connected to the mounting bracket through the spring.

U.S. Patent No. 3425657 discloses a rear view mirror assembly having a ball and socket joint. The ball includes a plurality of projections mating within grooves in the socket. The rear view mirror assembly, however, cannot break away from the windshield.

The present invention has been developed in view of the foregoing background and to overcome the foregoing drawbacks. It is accordingly an object of this invention to provide a connecting device for a rear view mirror assembly which facilitates installation.

Another object of the present invention is to provide a rear view mirror assembly which is able to break away from a windshield, when more than a predetermined amount of a force is applied to the rear view mirror assembly in all directions of the rear view mirror.

It is another object of the invention to provide a rear view mirror assembly which is able to be adjusted universally to a wide range of angular positions.

Further, it is another object of the present invention to provide a first base member of a rear view mirror assembly which engages a second base member of a first unit of the rear view mirror assembly without an engagement device.

To this end, a rear view assembly in accordance with the present invention is characterized by the features specified in the characterising portions of claim 1, 9 and 10.

In order to accomplish the above-described objects, a rear view mirror assembly according to the present invention includes a first base member and a first unit of the rear view mirror assembly. The first unit of the rear view mirror assembly includes a second base member, a mounting member, a spring, a support arm, a second ball member, a bolt and a rear view mirror. The first base member is preferably cemented to a windshield of a vehicle, and is provided with a plurality of flanges which engage the second base member.

The second base member has a hook and a mounting portion. The mounting member is disposed on the mounting portion of the base member, and includes a first socket portion and a first aperture thereon. The first aperture is opened in the first socket portion. The spring is mounted on the hook of the base member, and the spring has an engagement device. The support arm includes an outer surface and an inner surface on an end thereof. The outer surface of the support arm is slidably mounted on the first socket portion of the mounting member, and the inner surface of the support arm includes a second socket portion. A second aperture is opened in both of the second socket portion of the inner surface and the outer surface. The rear view mirror is rotatably mounted on an opposite end of the support arm.

The second ball member is slidably mounted on the second socket portion of the support arm, and the second ball member is connected to an end of the bolt. The bolt is inserted into the second aperture of the support arm and the first aperture of the mounting member, and the other end of the bolt is engaged with the disengagement device of the spring.

Therefore, the components of the first unit of the rear view mirror assembly are united to facilitate installation of the first unit on the first base member. The present invention thus obviates the piece-by-piece installation procedures common to the prior art.

The second unit of the rear view mirror assembly includes the spring, the mounting member, the support arm, the second ball member, the bolt and the rear view mirror. The spring of the first unit of the rear view mirror assembly can support a predetermined amount of the downward vertical force on the hook of the base member, so that the second unit of the rear view mirror assembly can break away from the second base member, when more than the predetermined amount of the downward vertical force is applied thereto.

Further, the engagement device of the spring has an inner end therein, so that the inner end prevents the bolt from being inserted more than a predetermined length. Therefore, a length defined between the engagement device and the second ball member is constant. Accordingly, it is not necessary of a worker to pay any attention to the length during assembly.

A diameter of the second aperture of the support arm is longer than a diameter of both the first aperture of the mounting member, so that the support arm can rotate about the bolt, and the support arm is capable of being universally adjusted to any angle in a wide range of angles.

The above objects, features and advantages of the present invention will become more apparent from the description of the invention which follows, taken in conjunction with the accompanying drawings, wherein like reference numerals denote like elements, and wherein:

Figure 1 is a perspective view showing a rear view mirror assembly according to the present invention;

Figure 2 is an enlarged cross-sectional view of the rear view mirror assembly of a first embodiment, taken along the line II—II in Figure 1;

Figure 3 is an enlarged perspective view showing components of the rear view mirror assembly shown in Figure 1 in a disassembled condition;

Figure 4 is a cross-sectional view of the second base member of the rear view mirror assembly of Figure 3 taken along the line IV—IV of Figure 3;

Figure 5 is a cross-sectional view of the first base member of the rear view mirror assembly of Figure 3, taken along the line V—V of Figure 3;

Figure 6 is a cross-sectional view of the second base member mounted to the first base member of the rear view mirror assembly, taken along the line V—V of Figure 3;

Figure 7 is a cross-sectional view of the rear view mirror assembly of Figure 2, which shows the support arm rotated about a central rotational point 17 of the support arm in the clockwise direction of Figure 2 when a force "$F_1$", is applied to the support arm in the horizontal direction of Figure 2;

Figure 8 is a cross-sectional view of the rear view mirror assembly of Figure 2 which shows the support arm rotated about the central point 17 in the clockwise direction in an amount greater than the condition illustrated in Figure 7;

Figure 9 is a cross-sectional view of the rear view mirror assembly of Figure 2, which shows the force "$F_1$" applied to the support arm along the line connecting the central point 17 of the support arm to a central point for the rotation of the rear view mirror;

Figure 10 is a cross-sectional view of the rear view mirror assembly of Figure 2, which shows the support arm rotated about a contact point 27 between a mounting member and a base member in the clockwise direction;

Figure 11 is an enlarged perspective view of the rear view mirror assembly of a second embodiment, illustrating the components in a disassembled condition;

Figure 12 is an enlarged perspective view of the rear view mirror assembly of a third embodiment, illustrating the components in a disassembled condition; and

Figure 13 is an enlarged cross-sectional view of the rear view mirror assembly of a fourth embodiment, taken along the line II—II in Figure 1.

The present invention will be described in detail with reference to the accompanying drawings which illustrate different embodiments according to the present invention.

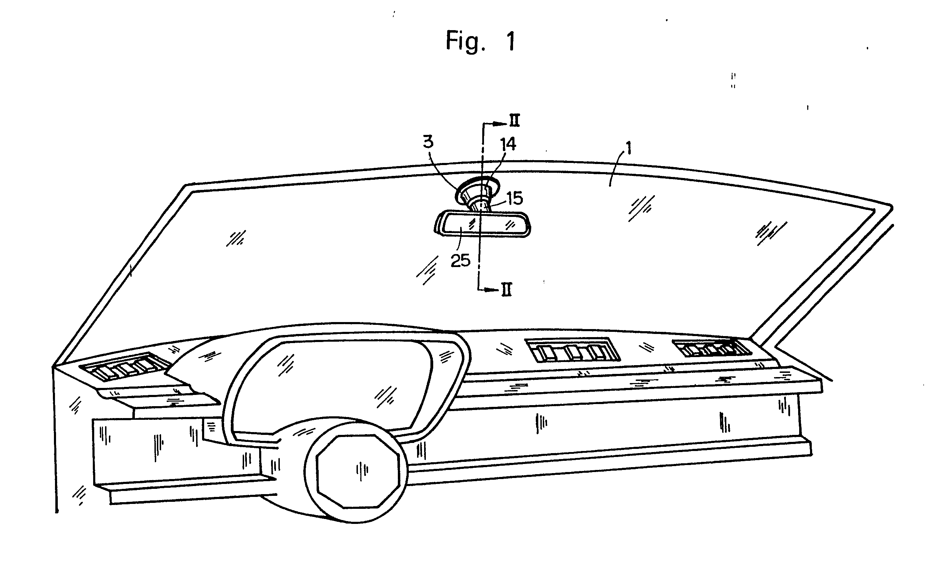

Referring to Figure 1, a rear view mirror assembly is disposed at an upper central portion of a windshield 1 of a vehicle. A rear view mirror 25 is rotatably mounted on an inner surface of the windhsield 1 through a support arm 15, a mounting member 14 and a first base member 3.

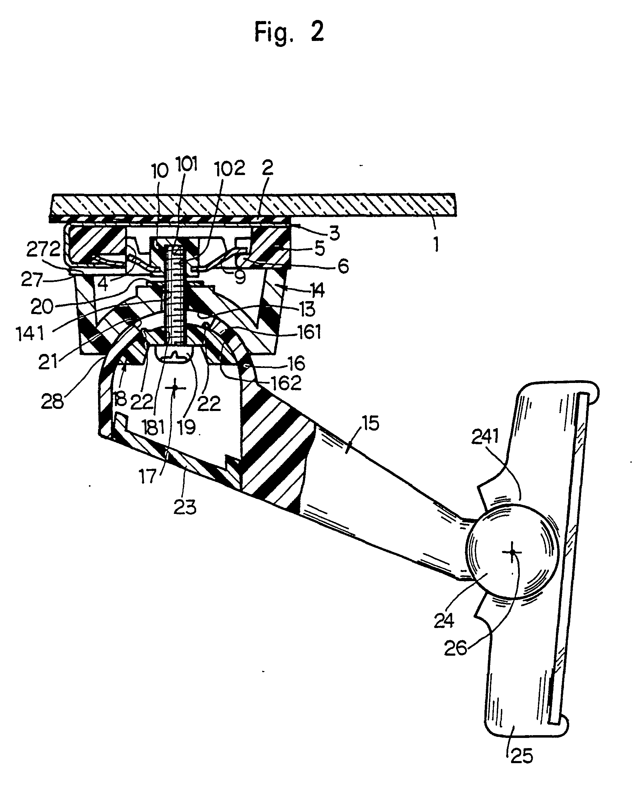

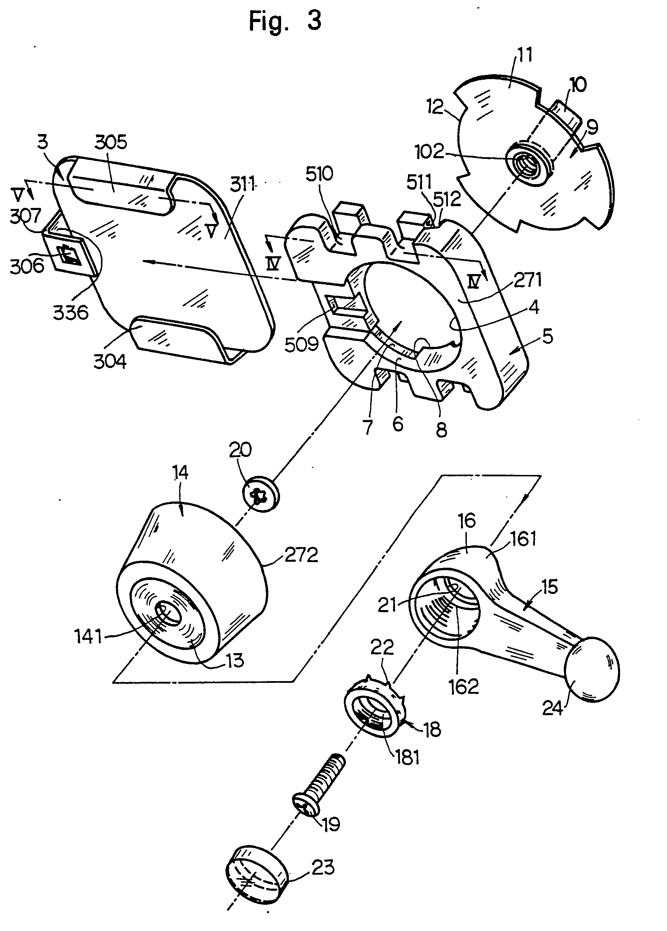

As shown in Figure 2 and Figure 3, the first base member 3 is cemented by an adhesive 2 to the windshield 1. The first base member 3 includes a plurality of first flanges 304, 305 and a second flange 307. Each of the plurality of first flanges 304, 305 is disposed on a side portion of the first base member 3.

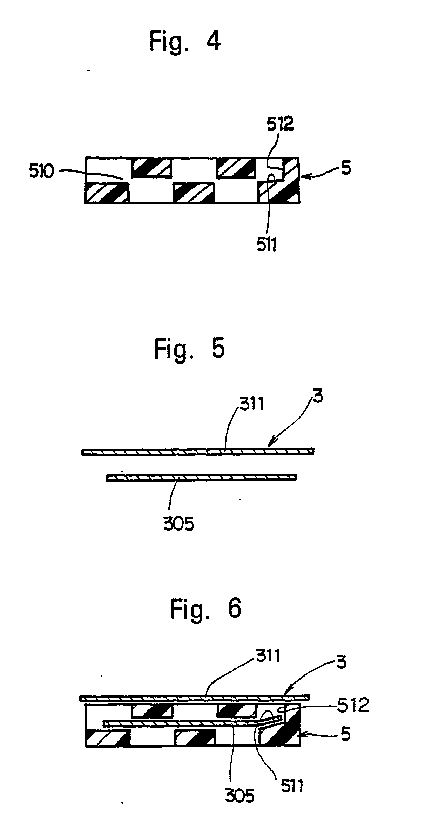

As shown in Figure 5, the first flange 305 has a plate which extends horizontally, and parallels a main plate 311 of the first base member 3. As shown in Figure 3, the first flange 305 extends downwardly from the side portion of the main plate 311 of the first base member 3, and is bent toward an inside of the first base member 3.

The second flange 307 is disposed on a front portion of the first base member 3, and includes a second stopper 336 and a pawl 306. The second stopper 336 is on a vertical portion of the second flange 307 which extends downwardly from the main plate 311 of the first base member 3. The pawl 306 is disposed on a horizontal portion of the second flange 307 which extends from a lower part of the vertical portion of the second flange 307. The pawl 306 is biased upwardly toward the main plate 311.

A first unit for installing the rear view mirror assembly on the windshield 1 includes a second base member 5, a spring 9, the mounting member 14, the support arm 15, a second ball member 18 and a bolt 19.

The second base member 5 is mounted on the plurality of first flanges 304, 305 and the second flange 307 of the first base member 3. The second base member 5 includes a plurality of upper projections and a plurality of lower projections which are disposed on both sides of the second base member 5. Each projection of the lower projections and the upper projections has an inner surface. As shown in Figure 4 and Figure 6, a gash 510 is defined between the inner surfaces of the lower projections and the inner surfaces of the upper projections on each side of the second base member 5. The plates of the first flanges 304, 305 of the first base member 3 are inserted into the gash 510 on each side of the second base member 5. A rearmost projection (i.e., furthest from the pawl 306) on each side of the second base member 5 includes a third stopper 512 and an inclined inner surface 511, so that a rear portion of the plate of the first flange 305 of the first base member 3 is bent along the inclined inner surface 511 of the rearmost projections of the second base member 5. Accordingly, the plates of the first flanges 304, 305 of the first base member 3 securely engage with the inner surfaces of the projections of the second base member 5.

The second stopper 336 of the second flange 307 of the first base member 3 and the third stopper 512 of the rearmost projection of the second base member 5 prevent the second base member from being inserted more than a predetermined distance on a plurality of the first flanges 304, 305 and the second flange 307 of the first base member 3.

The second base member 5 includes an engagement recess 509 which is defined on a bottom surface thereof, and the pawl 306 of the second flange 307 of the first base member 3 engages with the engagement recess 509 of the second base member 5. Therefore, the pawl 306 of the first base member 3 prevents the second base member 5 from moving between the plurality of the first flanges 304, 305 and the second flange 307 of the first base member 3.

The second base member 5 includes a mounting portion 271 which is disposed in the vicinity of an outer peripheral edge thereof, and is on a substantially flat horizontal surface. A hook 6 extends from an inner portion of the mounting portion 271. The hook 6 has an inner peripheral edge and an upper surface, the inner peripheral edge defining an opening 4 within the second base member 5. The upper surface of the hook 6 has a plurality of second projections 8 and a plurality of second recesses 7 thereon.

A spring 9 is disposed within the opening 4 of the second base member 5. The spring 9 includes a cap 10, a plurality of first projections 11 and a plurality of first recesses 12. The cap 10 is fixed at a central portion of the spring 9, and includes a cavity 102 with an inner end 101 therein. The cavity 102 of the cap 10 includes a screw hole therein.

The plurality of first projections 11 of the spring 9 extend outwardly in its radial direction, and engage with the plurality of second recesses 7 of the second base member 5. Therefore, the spring 9 engages securely with the second base member 5, so that the spring 9 cannot rotate in the opening 4 of the second base member 5. Further, the spring 9 can support a predetermined amount of a downward vertical force so that the spring 9 can break away from the hook 6, when more than the predetermined amount of the downward vertical force is applied to the spring 9.

The mounting member 14 is disposed on the mounting portion 271 of the second base member 5. The mounting member 14 includes an upper peripheral edge 272 and a first socket portion 13. The upper peripheral edge 272 is in contact with the mounting portion 271 of the second base member 5, and the first socket portion 13 of the mounting member 14 is formed in a lower surface of the mounting member 14. The first socket portion 13 is formed in a semi-spherical concave shape, and has a first aperture 141 at the central portion of the mounting member 14.

The support arm 15 is pivotally mounted on the first socket portion 13 of the mounting member 14. The support arm 15 has an opposite end 24. The end 16 of the support arm 15 includes an outer surface and an inner surface. The outer surface of the support arm 15 has a first ball portion 161 thereon formed in a semi-spherical convex shape. The first ball portion 161 is mounted on the first socket portion 13 of the mounting member 14. The inner surface of the support arm 15 includes a second socket portion 162 which is formed in a semi-spherical concave shape. The inner surface of the support arm 15 defines a recess within the end 16 of the support arm 15, and a second aperture 21 is opened between the second socket portion 162 of the inner surface of the support arm 15 and the first ball portion 161 on the outer surface of the support arm 15. The second aperture 21 has an inner peripheral edge. A diameter of the second aperture 21 is greater than the diameter of the first aperture 141 of the mounting member 4.

A curved or second ball member 18 having an upper semi-spherical convex surface is slidably mounted on the second socket portion 162 of the supporting arm 15. The second ball member 18 has a third aperture 181 and a plurality of protrusions 22 on its convex surface. Preferably, at least three protrusions 22 are disposed on the upper semi-spherical convex surface. The protrusions 22 are normally located within the inner peripheral edge of the second aperture 21.

A bolt 19 is provided for securing the various components together. The bolt 19 includes a head portion on an end thereof adjacent the second ball member 18. The opposite end of the bolt 19 is inserted into the cavity 102 in the cap 10 of the spring 9. An intermediate shank portion of the bolt 19 extends through the third aperture 181 of the second ball member 18, the second aperture 21 of the support arm 15, and the first aperture 141 of the mounting member 14. A diameter of the second aperture 21 is greater than the diameter of the first aperture 141 and the third aperture 181, so that the support arm 15 is supported for universal movement. That is, the support member 15 can rotate about the vertical axis of the bolt 19 (Figure 2), the protrusions 22 rotating within the second aperture 21. The support member 15 can also rotate about a central point 17 (Figure 2) of the support arm 15 to an extent defined by the inner peripheral edge of the second aperture 21. Rotation about the central point 17 requires the inner surface of the support arm 15 to ride over the protrusions 22.

It should be apparent to one skilled in the art that the bolt 19 may be a screw or a rod.

The opposite end of the bolt 19 is prevented from being inserted into the cavity 102 of the cap 10 more than a predetermined length by the inner end 101 of the cap 10, so that a bolt length defined between the cap 10 and the head portion of the bolt 19 is constant. The bolt length between the cap 10 and the head portion of the bolt 19 is greater than a sum of the thicknesses of the mounting member 14 around the first aperture 141, the supporting arm 15 around the second aperture 21, and the second ball member 18 around the third aperture 181. Therefore, the support arm 15 can move along the longitudinal axis of the bolt 19, as well as rotating about a central portion 17 of the support arm 15.

It will be apparent to one skilled in the art that the bolt 19 may be integral with the second ball member 18.

The recess of the support arm 15 opens downward in a lower portion of the support arm 15, and a cover 23 is disposed within the recess. Therefore, the cover 23 covers the recess and improves the aesthetic appearance of the rear view mirror assembly.

The opposite end of the support arm 15 includes a ball portion 24, and the ball portion 24 formed in a spherical ball shape. The ball portion 24 is rotatably received in a spherical socket portion 241 which is defined within the rear view mirror 25.

When the bolt 19 engages the spring 9, a second unit of the rear view mirror assembly is formed and includes the bolt 19, the spring 9, the mounting member 14, the support arm 15 and the second ball member 18. When the second unit is attached to the second base member 5 by engaging the spring 9 on the hook 6, a first unit of the rear view mirror assembly is formed. The first unit can be attached to the first base member 3 as described above. When more than the predetermined amount of the downward vertical force is applied to the spring 9, the second unit of the rear view mirror assembly can break away from the second base member 5.

A washer 20 is disposed between the cap 10 and the mounting member 14. Preferably, the washer 20 is made of synthetic resin. The washer 20 includes a hole therein which is slightly smaller than a diameter of the bolt 19. Therefore, the washer 20 prevents the bolt 19 from moving easily in the hole of the washer 20, once the bolt 19 is inserted into the hole of the washer 20. Further, the washer 20 and the bolt 19 can unite the mounting member 14, the support arm 15 and the second ball member 18, such that these components cannot change their relative position during assembly of the rear view mirror. During assembly, these components (i.e., mounting member 14, support arm 15 and second ball member 18, all of which are united by the bolt 19 and the washer 20) are attached to the spring 9 by threading the bolt 19 into the cop 10 to form the second unit. The assembly of the second unit with the second base member 5 forms the first unit.

As shown in Figure 2, the plurality of protrusions 22 of the second ball member 18 are normally disposed in the second aperture 21 of the support arm 15, so that the plurality of protrusions 22 normally prevent the rotation of the support arm 15 about the central point 17. Therefore, it is convenient for a worker to assemble the components into the second unit and to install the second unit of the rear view mirror assembly on the second base member 5, because these components cannot change their positions due to the interlocked relation between the protrusions 22 and the second aperture 21 of the support arm 15. That is, the insertion of the protrusions 22 within the second aperture 21 temporarily maintains the components in position during assembly. As noted above, once assembled, the inner surface of the support arm 15 can ride over the protrusions 22 to permit rotation about the central point 17.

The second unit is attached to the second base member 5 to form the first unit. The first unit is easily installed on a vehicle by sliding the second base member 5 between the flanges 304, 305 of the first base member 3. The second base member 5 is locked in the correct position on the first base member 3 by the second and third stoppers 336, 512, as well as engagement of the pawl 306 in the recess 509.

Consequently, assembly and installation of the rear view mirror in accordance with the present invention are simplified. Assembly and installation are thus less cumbersome and time consuming than known rear view mirror assemblies.

Description will be hereunder given of operation of the above-described embodiment.

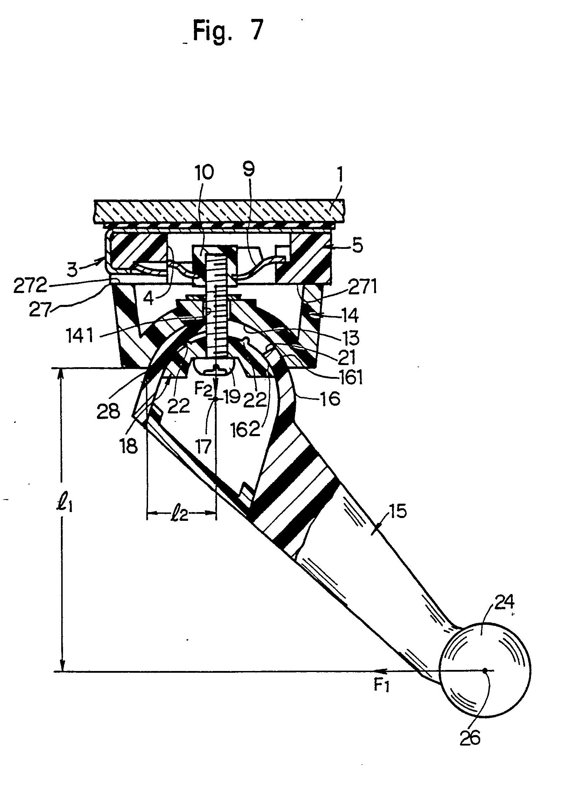

As shown in Figure 7, the inner surface of the support arm 15 can ride on the protrusion 22 of the second ball member 18, when a force "$F_1$" is applied to a central point 26 of the ball end 24 of the support arm 15. As a result of the force "$F_1$", the support arm 15 rotates about a central point 17 of the support arm 15. The intermediate shank portion of the bolt 19 limits the movement of the support arm 15 to rotate within a space defined by the second aperture 21. That is, the inner peripheral edge of the second aperture 21 contacts the intermediate shank portion of the bolt 19 and thus limits the rotation of the support arm 15 about the central point 17.

When the force "$F_1$" is continuously applied to the support arm 15 in the horizontal direction in Figure 7, a first moment $M_1$ in the clockwise direction about a point 28 is calculated by a first formula (1) as follows:

$$M_1 = l_1 \cdot F_1 \qquad (1)$$

In this first formula (1), $l_1$ is a vertical length between the point 28 and the central point 26 of the ball end 24 for the rear view mirror 25. The point 28 is defined between the first ball portion 161 of the support arm 15 and an edge of the first socket portion 13 of the mounting member 14.

A second moment "$M_2$" in the clockwise direction about point 28 in Figure 7 is calculated by the second formula (2) as follows:

$$M_2 = l_2 \cdot F_2 \qquad (2)$$

In the second formula (2), $l_2$ is the horizontal length between point 28 and the bolt 19, and "$F_2$" is a downward vertical force on the bolt 19. The resiliency of the spring 9 resists the force "$F_2$".

For equilibrium, $M_1$ must equal $M_2$. Therefore, the downward vertical force "$F_2$" along the bolt 19, which is applied to the spring 9, is calculated by a third formula (3) as follows:

$$F_2 = (l_1/l_2) \cdot F_1 \qquad (3)$$

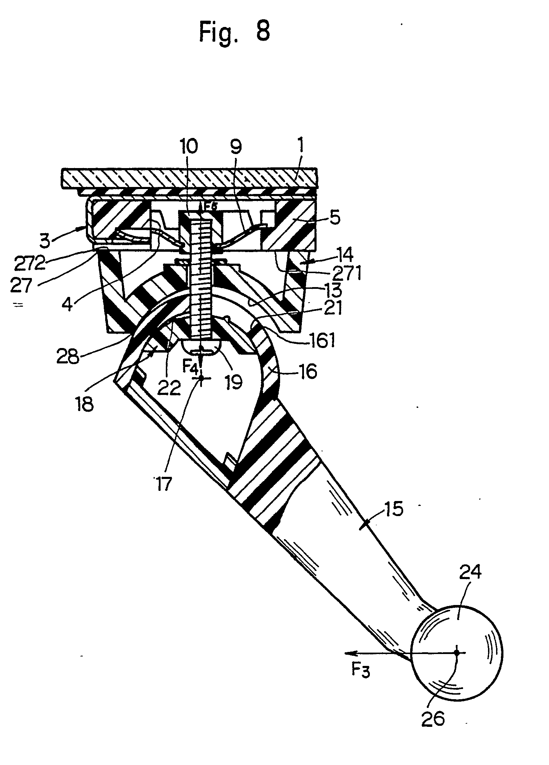

In Figure 8, a force "$F_3$" is applied to the central point 26 and a downward vertical force "$F_4$" is applied to the spring 9. If the forst "$F_3$" is larger than the force "$F_1$", and a force "$F_4$" is not larger than the predetermined downward vertical force, the support arm 15 is further rotated about the point 28. The first ball portion 161 of the support arm 15 separates partially from the first socket portion 13 of the mounting member 14, and the support arm 15 is supported by the spring 9. In this condition, the force "$F_4$" is balanced with a bias force "$F_5$" of the spring 9 so that the moments generated about the point 28 are equal. The force "$F_4$" is calculated by a fourth formula (4) as follows:

$$F_4 = (l_1/l_2) \cdot F_3 \qquad (4)$$

Next, if the force "$F_3$" becomes larger, and the force "$F_4$" becomes larger than the predetermined amount of the downward vertical force, the spring 9 can break away from the hook 6 of the second base member 5. Concurrently the first unit of the rear view mirror assembly can break away when the spring 9 separates from the hook 6.

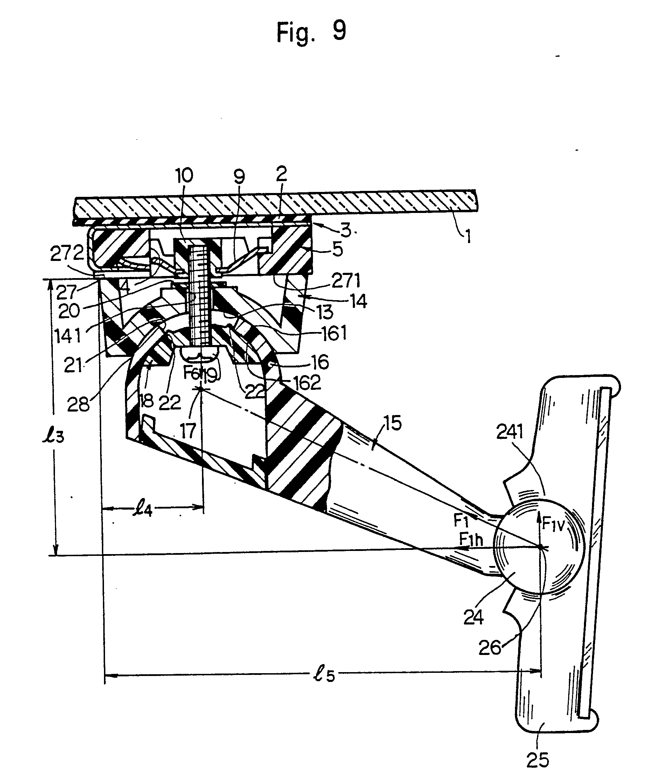

As shown in Figure 9, when the force "$F_1$" is applied to the support arm 15 along the line which connects the central point 26 to the central point 17 of the support arm 15, the support arm 15 cannot be rotated about the central point 17.

However, the vertical and horizontal components $F_{1v}$, $F_{1h}$ of the force $F_1$ cause a third moment $M_3$ in the clockwise direction about a point 27, the point 27 being defined between the mounting portion 271 of the second base member 5 and the upper edge 272 of the mounting member 14. The third moment $M_3$ in the clockwise direction about the point 27 is calculated by a fifth formula (5) as follows:

$$M_3 = l_3 \cdot F_{1h} - l_5 \cdot F_{1v}. \qquad (5)$$

In this fifth formula (5), $l_3$ is a vertical length between the point 27 and the central point 26 of the rotation of the rear view mirror 25, and $l_5$ is a horizontal length between the point 27 and the point 26.

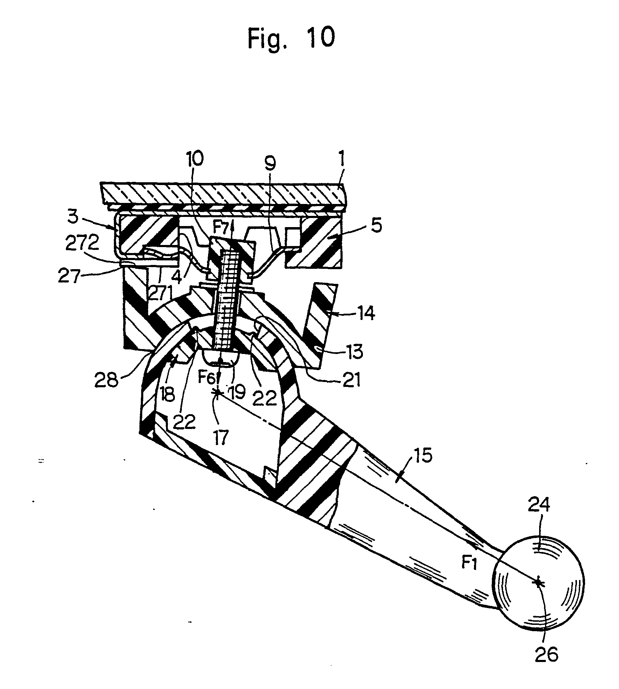

Therefore, as shown in Figure 10, the support arm 15 and the mounting member 14 can be rotated about the point 27, so that the upper edge 272 of the mounting member 14 separates partially from the mounting portion 271 of the second base member 5. In this case, both of the support arm 15 and the mounting member 14 are supported by the spring 9. In Figure 10, a downward vertical force "$F_6$" along the bolt 19 generates a fourth moment $M_4$ in the clockwise direction about the point 27. The fourthmoment $M_4$ is calcualted by the following sixth formula (6):

$$M_4 = F_6 \cdot I_4 \qquad (6)$$

In this sixth formula (6), $I_4$ is a horizontal length between the point 27 and the bolt 19.

If $M_3$ equals $M_4$, then the force $F_6$ along the bolt 19 is balanced with a bias force "$F_7$" of the spring 9 and calculated by a seventh formula (7) as follows:

$$F_6 = (I_3 \cdot F_{1h} - I_5 \cdot F_{1v})/I_4 = F_7 \qquad (7)$$

Next, if the force "$F_1$" increases and the force "$F_6$" becomes larger than the predetermined amount of the downward vertical force, the spring 9 can break away from the hook 6 of the second base member 5. Therefore, the first unit of the rear view mirror assembly can break away.

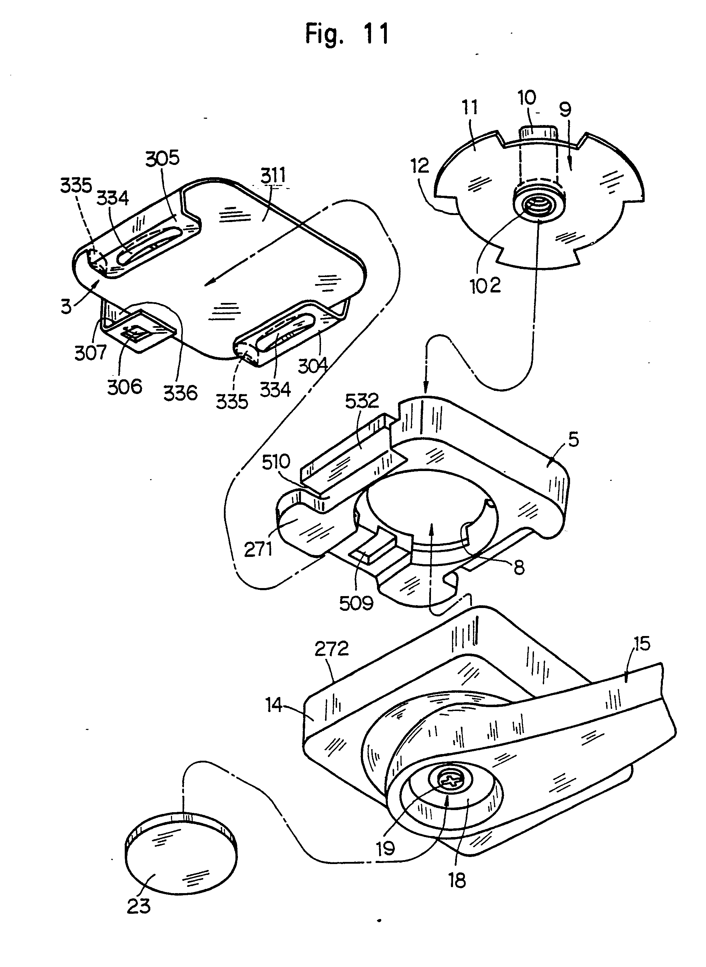

A second embodiment of a rear view mirror assembly is shown in Figure 11. The second embodiment is similar to the first embodiment disclosed in Figure 2. However, the second embodiment has several differences disclosed hereunder.

The first base member 3 has a pair of first flanges 304, 305, each having a plate. Each plate of the first base member 3 has a protrusion 334 which projects upwardly toward the main plate 311. In addition, the protrusion 334 of the first base member 3 is biased upwardly. Once assembled, the protrusion 334 of the first base member 3 is in contact with an inner surface 532 of an upper projection of a second base member 5, so that the protrusion 334 of the first base member 3 biases the second base member 5 on a main plate 311 of the first base member 3.

Each of the pair of the first flanges 304, 305 includes a first stopper 335 which is disposed on a front end of each of a pair of the first flanges 304, 305 adjacent the second flange 307. The first stopper 335 of each of the first flanges 304, 305 is a spring, which prevents the second base member 5 from being inserted more than a predetermined distance on the first flanges 304, 305 and the second flange 307 of the first base member 3.

The protrusion 334 and the first stopper 335 of the first flange 305 of the first member 3 prevent the second base member 5 from vibrating in a space which is defined between the plates of the first flanges 304, 305 and the main plate 311 of the first base member 3 in the vertical and longitudinal directions of the vehicle. Like the first embodiment, the second embodiment facilitates installation of the rear view mirror assembly.

A third embodiment of rear view mirror assembly is shown in Figure 12. The third embodiment is similar to the first embodiment disclosed in Figure 3. However, the third embodiment has several differences disclosed hereunder.

A first base member 3 includes a wall 313, a first flange 314, a pair of holes 317 and a pair of clamping taps 315. The wall 313 extends downwardly from a main plate 311 of the first base member 3 and is formed in a letter 'U' shape. The first flange 314 of the first base member 3 extends horizontally from a lower edge of the wall 313, and parallels the main plate 311 of the first base member 3. Each of a pair of holes 317 of the first base member 3 is opened in each of side portion of the wall 313, and each of the clamping tabs 315 extends-horizontally from each of a pair of rear ends of the wall 313. The clamping tab 315 of the first base member 3 are spring biased toward an inside of the first base member 3. A space is defined between the main plate 311 and an upper edge of the clamping tab 315, and a rear end of the clamping tab 315 is bent back outwardly.

A second base member 5 includes an outer peripheral wall 520, a pair of pawls 521, and a step thereon. A front portion of the outer peripheral wall 520 of the second base member 5 is in contact with the wall 313 of the first base member 3, and a mounting portion 271 of the second base member 5 is mounted on the first flange 314 of the first base member 3. Each of the pair of pawls 521 of the second base member 5 engages with each of the pair of holes 317 of the first base member 3. The step of the second base member 5 is defined within a rear portion of the second base member 5, and the step of the second base member 5 includes a first horizontal plate 522 and a vertical surface 523. The first horizontal plate 522 of the second base member 5 is inserted into the space defined between the main plate 311 and the clamping tabs 315, and the vertical surface 523 of the second base member 5 is in contact with the clamping tabs 315 of the first base member 3. The third embodiment also facilitates installation of the rear view mirror assembly.

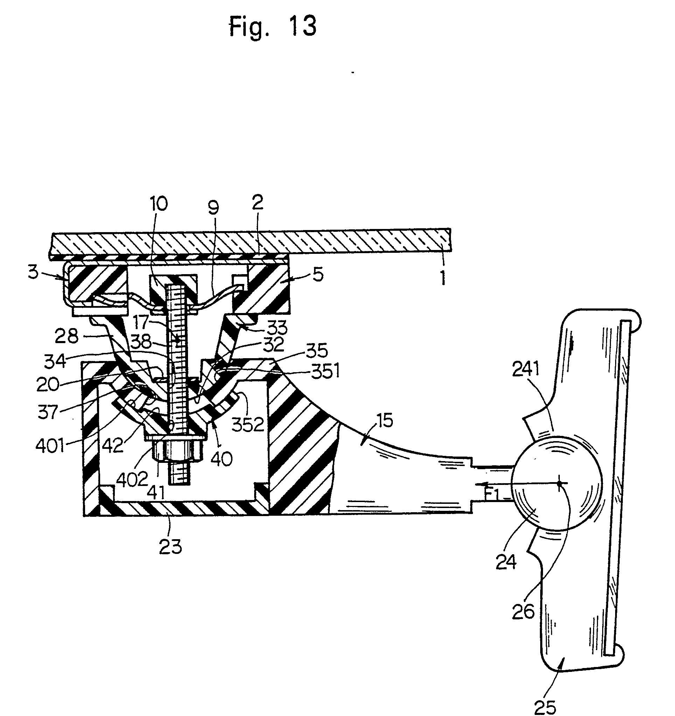

A fourth embodiment of a rear view mirror assembly is shown in Figure 13. The fourth embodiment is similar to the first embodiment disclosed in Figure 2. However, the fourth embodiment has several differences disclosed hereunder.

A bolt 38 engages with a cap 10 and extends downwardly from the spring 9. A mounting member 33 includes a third ball portion 32 at a lower surface thereof, and a fourth aperture 34 therein. The fourth aperture 34 is opened in the third ball portion 32, and the bolt 38 is inserted into the fourth aperture 34. A diameter of the fourth aperture 34 is slightly longer than a diameter of the bolt 38. The third ball portion 32 of the mounting member 33 is formed in a semi-spherical convex shape.

A support arm 15 includes an end 35 and an opposite end. The end 35 of the support arm 15 includes an outer surface and an inner surface thereof. A third socket portion 351 is formed on the outer surface of the support arm 15, and the third socket portion 351 is slidably mounted on the third ball portion 32 of the mounting member 33. The third socket portion 351 of the support arm 15 is formed in a semi-spherical socket concave shape, and a fifth aperture 37 is opened in the third socket portion 351 of the support arm 15. A diameter of the fifth aperture 37 of the support arm 15 is longer than the diameter of the fourth aperture 34 of the mounting member 33, and the bolt 38 is inserted into the fifth aperture 37 of the support arm 15. A fourth ball portion 352 is formed on the inner surface of the support arm 15, and the fourth ball portion 352 of the support arm 15 is formed in a semi-spherical convex shape. The fifth aperture 37 is opened in the fourth ball portion 352 of the support arm 15.

A fourth socket member 40 is mounted on the fourth ball portion 352 of the support arm 15, and the fourth socket member 40 includes an upper semi-spherical concave surface 401 and an inner peripheral edge thereof. The inner peripheral edge defines a sixth aperture 402 which is opened in the upper semi-spherical concave surface 401 thereof. A diameter of the sixth aperture 402 of the fourth socket member 40 is slightly longer than the diameter of the bolt 38, and the bolt 38 is inserted into the sixth aperture 402 of the fourth socket member 40.

The fourth socket member 40 includes a second protrusion 42 on the upper semi-spherical concave surface 401 thereof, and the second protrusion 42 is disposed around the sixth aperture 402 of the fourth socket member 40. The second protrusion 42 is formed in a trapezoid shape. The second protrusion 42 of the fourth socket member 40 is normally disposed into the fifth aperture 37 of the support arm 15, and the second protrusion 42 includes an inclined side and a semi-spherical concave surface thereof. An outer peripheral edge of the second protrusion 42 is rounded off. The inclined side of the second protrusion 42 is in contact with the inner peripheral edge of the support arm 15.

Therefore, the second protrusion 42 of the fourth socket member 40 temporarily prevents the support arm 15 from rotating about a central point 17 of the support arm 15. However, the fourth ball portion 352 of the support arm 15 can ride on the second protrusion 42 of the fourth socket member 40 by way of the inclined side and the round outer peripheral edge of the second protrusion 42, when a force "$F_1$" is applied on the support arm 15. A nut 41 is disposed under the fourth socket member 40 and the nut 41 engages with the bolt 38. Therefore, the nut 41 can support the fourth socket member 40, the support arm 15 and the mounting member 33 on the hook 6 of the second base member 5 through the bolt 38 and the spring 9.

A first unit of the rear view mirror assembly of the fourth embodiment includes the second base member 5, the spring 9, the fourth socket member 40, the support arm 15, the mounting member 33 and the bolt 38. The first unit of the fourth embodiment united by the bolt 38, so that it is easy for a worker to install the first unit of the fourth embodiment on the first base member 3. Accordingly it is not necessary for a worker to install components of the rear view mirror assembly on the windshield 1 piece by piece.

As described herein, the present invention overcomes the shortcomings of the known art by providing a first unit of the rear view mirror assembly enables a worker to install easily components of the rear view mirror assembly on a windshield or a body member of a vehicle.

## Claims

1. A rear view mirror assembly of a vehicle comprising a first base member (3) secured to the vehicle, and a unit of the rear view mirror assembly, characterized in that the first base member (3) has a side portion with a first flange (305) and a front portion with a second flange (307), and the unit of the rear view mirror assembly comprises a second base member (5) mounted on the first and second flanges (305, 307) of the first base member (3), the second base member (5) having a hook (6) and a mounting portion (271) thereon, a spring member (9) mounted on the hook (6) of the second base member (5) and having an engagement means (10) thereon, the spring member (9) supporting a predetermined amount of a force on the hook (6) of the second base member (5), a mounting member (14) having a first surface (272) disposed on the mounting portion (271) of the second base member (5), the mounting member (14) having a first aperture (141) and a first socket portion (13) disposed around the first aperture (141) on a second opposite surface of the mounting member (14), a support arm (15) having a first end (16) with an outer surface (161), an inner surface and an inner peripheral edge, and a second opposite end (24) on which a rear view mirror (25) is adapted to be rotatably mounted, the outer surface (161) of the support arm (15) mounted slidably on the first socket portion (13) of the mounting member (14), the inner surface of the support arm (15) having a second socket portion (162), the inner peripheral edge defining a second aperture (21) extending from the second socket portion (162) of the inner surface to the outer surface (161) of the support arm (15), a diameter of the second aperture (21) of the support arm (15) being greater than a diameter of the first aperture (141) of the mounting member (14), a second ball member (18) mounted slidably on the second socket portion (162) of the inner surface of the support arm (15), and an engagement member (19) inserted into the second aperture (21) of the support arm (15) and the first aperture (141) of the mounting member (14), the engagement member (19) having one end engaging with the engagement device (10) of the spring member (9), and an opposite end of the engagement member (19) connected to the second ball member (18), the engagement member (19) supporting the second ball member (18), the support arm (15) and the mounting member (14) on the second base member (5) through the spring member (9), the unit of the rear view mirror assembly being united by the engagement member (19), and installed on the first base member (3).

2. A rear view mirror assembly as claimed in claim 1, characterized in that the second flange (307) of the first base member (3) has a pawl (306), and the second base member (5) of the unit has an engagement recess (509) in which the pawl (306) of the second flange (307) of the first base member (3) is inserted, the pawl (306) of the second flange (307) of the first base member (3) preventing the second base member (5) from separating from the second flange (307) of the first base member (3).

3. A rear view mirror assembly as claimed in claim 2, characterized in that the first flange (305) of the first base member (3) has a plate which extends to the inside of the first base member (3), and the second base member (5) of the unit has a gash (510) which is defined within a side surface of the second base member (5), whereby the plate of the first base member (3) is inserted into the gash (510) of the second base member (5).

4. A rear view mirror assembly as claimed in claim 3, characterized in that the gash (510) of the second base member (5) has an inclined inner surface (511), whereby the plate of the first base member (3) is bent along the inclined inner surface (511) of the second base member (5).

5. A rear view mirror assembly as claimed in claim 3, characterized in that the plate of the first flange (305) of the first base member (3) has a protrusion (334) thereon, and the second base member (5) has an inner surface (532) which is disposed within the gash (510) thereof, whereby the protrusion (334) of the plate of the first flange (305) contacts the inner surface (532) of the second base member (5).

6. A rear view mirror assembly as claimed in claim 3, characterized in that the plate of the first flange (305) of the first base member (3) has a first stopper (335) on a front end thereof, whereby the first stopper (335) of the plate of the first flange (305) prevents the second base member (5) from being inserted more than a predetermined distance on the first flange (305) of the first base member (3).

7. A rear view mirror assembly as claimed in claim 2, characterized in that the second flange (307) of the first base member (3) has a second stopper (336), whereby the second stopper (336) of the second flange (307) of the first base member (3) prevents the second base member (5) from being inserted more than a predetermined distance on the second flange (307) of the first base member (3).

8. A rear view mirror assembly as claimed in claim 2, characterized in that the first flange (305) of the first base member (3) has a plate which extends to the inside of the first base member (3), and the second base member (5) of the unit has a projection which is disposed on a side surface of the second base member (5), whereby the projection of the second base member (5) is mounted on the plate of the first base member (3).

9. A rear view mirror assembly for installation on the body member of a vehicle comprising a first base member (3) secured to the vehicle and a unit of the rear view mirror assembly, characterized in that the first base member (3) having a wall (313), a first flange (314) and clamping tabs (315), the wall (313) of the first base member (3) extending from a main plate (311) of the first base member (3), the first flange (314) of the first base member (3) extending inwardly from a lower edge of the wall (313) of the first base member (3), the clamping tabs (315) extending in a rearward direction of the vehicle from both ends of the wall (313) of the first base member (3), and the first unit of the rear view mirror assembly comprises, a second base member (5) having a mount portion (271), a first plate (522) and a hook (6) thereon, a front part of the mount portion (271) of the second base member (5) being mounted on the first flange (314) of the first base member (3), the first plate (522) being mounted on the clamping tabs (315) of the first base member (3), a spring member (9) mounted on the hook (6) of the second base member (5), the spring member (9) having a cap (10) and supporting a predetermined amount of a force on the hook (6) of the second base member (5), a mounting member (14) disposed on an inner part of the mounting portion (271) of the second base member (5), the mounting member (14) having a first aperture (141) and a first socket portion (13), the first aperture (141) opened in the first socket portion (13) and disposed on a surface of the mounting member (14), a support arm (15) having a first end (16) with a first ball portion (161), an inner peripheral edge and a second socket portion (162), and a second opposite end (24) on which a rear view mirror is adapted to be rotatably supported, the first ball portion (161) of the support arm (15) diposed on an outer surface of the first end (16) of the support arm (15), the first ball portion (161) mounted slidably on the first socket portion (13) of the mounted member (14), the second socket portion (162) disposed on an inner surface (532) of the first end (16) of the support arm (15), the inner peripheral edge defining a second aperture (21) within the first end (16) of the support arm (15), the second aperture (21) extending through the second socket portion (162) of the support arm (15) and the first ball portion (161) of the support arm (15), a diameter of the second aperture (21) being greater than a diameter of the first aperture (141) of the mounting member (14), a second ball member (18) mounted slidably on the second socket portion (162) of the support arm (15), the second ball member (18) having a third aperture (181) thereon, and an engagement member (19) inserted into the third aperture (181) of the second ball member (18), the second aperture (21) of the support arm (15) and the first aperture (141) of the mounting member (14), one end of the engagement member (19) engaging with the cap (10) of the spring member (9), an opposite end of the engagement member (19) having a head portion which supports the second ball member (18), the support arm (15) and the mounting member (14) on the second base member (5) through the spring member (9), the unit of the rear view mirror assembly being united by the engagement member (19), and the unit of the rear view mirror assembly being installed on the first base member (3).

10. A rear view mirror assembly for a vehicle comprising a first base member (3) cemented to a body member of the vehicle, and a unit of the rear view mirror assembly, characterized in that the first base member (3) has a side portion with a first flange (305) and a front portion with a second flange (307), and the unit of the rear view mirror assembly comprises a second base member (5) mounted on the first flange (305) and the second flange (307) of the first base member (3), the second base member (5) having a hook (6) and a mounting portion (271) thereon, a spring member (9) mounted on the hook (6) of the second base member (5) and having a first engagement device (10) thereon, the spring member (9) being able to support a predetermined amount of a downward vertical force on the hook (6) of the second base member (5), a mounting member (33) disposed on the mounting portion (271) of the second base member (5), the mounting member (33) having a first aperture (34) and a first ball portion (32), the first ball portion (32) disposed around the first aperture (34) thereof, the first ball portion (32) disposed on a bottom surface of the mounting member (33), a support arm (15) having an outer surface (351), an inner surface and an inner peripheral edge disposed on an end (35) thereof, the outer surface (351) of the support arm (15) mounted slidably on the first ball portion (32) of the mounting member (33), the inner surface of the support arm (15) having a second ball portion (352), the inner peripheral edge defining a second aperture (37) within the end (35) of the support arm (15), the second aperture (37) of the support arm (15) extending from the second ball portion (352) of the inner surface to the outer surface (351) of the support arm (15), a diameter of the second aperture (37) being greater than the diameter of the first aperture (34) of the mounting member (33), a rear view mirror (25) mounted rotatably on an opposite end (24) of the support arm (15), a first socket member (40) mounted slidably on the second ball portion (352) of the support arm (15), and an engagement member (38) inserted into the second aperture (37) of the support arm (15) and the first aperture (34) of the mounting member (33), the engagement member (38) having one end engaging with the first engagement device (10) of the spring member (9), and an opposite end of engagement member (38) connected to the first socket member (40), the engagement member (38) supporting the first socket member (40), the support arm (15) and the mounting member (33) on the second base member (5) through the spring member (9), the unit of the rear view mirror assembly being united by the engagement member (38), and installed on the first base member (3).

## Patentansprüche

1. Rückspiegel-Bausatz eines Fahrzeugs mit einem ersten, am Fahrzeug befestigten Basisteil (3) und einer Baueinheit des Rückspiegel-Bausatzes, dadurch gekennzeichnet, daß das erste Basisteil (3) ein Seitenteil mit einem ersten Winkelstück (305) sowie ein Frontteil mit einem zweiten Winkelstück (307) aufweist und die Baueinheit des Rückspiegel-Bausatzes ein zweites, am ersten sowie am zweiten Winkelstück (305, 307) des ersten Basisteils (3) gehaltenes Basisteil (5) umfaßt, daß das zweite Basisteil (5) mit einem Haken (6) sowie einem Befestigungsteil (271) an diesem versehen ist, daß am Haken (6) des zweiten Basisteils (5) ein Federelement (9) mit einem Eingriffsstück (10) an diesem gehalten ist, daß das Federelement (9) eine vorbestimmte Größe einer Kraft am Haken (6) des zweiten Basisteils (5) aufnimmt, daß am Befestigungsteil (271) des zweiten Basisteils (5) ein Halterungsteil (14) mit einer ersten Fläche (272) befestigt ist, daß das Halterungsteil (14) eine erste Öffnung (141) sowie ein rund um die erste Öffnung (141) herum an einer zweiten, entgegengesetzten Fläche des Halterungsteils (14) angeordnetes erstes Sockelteil (13) aufweist, daß ein Tragarm (15) ein erstes Endstück (16) mit einer Außenfläche (161), einer Innenfläche sowie einer Innenumfangskante und ein zweites, entgegengesetztes Endstück (24), an dem ein Rückspiegel (25), drehbar zu befestigen ist, hat, daß die Außenfläche (161) des Tragarmes (15) gleitend am ersten Sockelteil (13) des Halterungsteils (14) gelagert ist, daß die Innenfläche des Tragarmes ein zweites Sockelteil (162) aufweist, daß die Innenumfangskante eine zweite, vom zweiten Sockelteil (162) der Innenfläche zur Außenflächen (161) des Tragarmes (15) verlaufende Öffnung (21) abgrenzt, daß ein Durchmesser der zweiten Öffnung (21) des Tragarmes (15) größer ist als ein Durchmesser der ersten Öffnung (141) des Halterungsteils (14), daß ein zweites Kugelelement (18) gleitend am zweiten Sockelteil (162) der Innenfläche des Tragarmes (15) gelagert ist und daß ein Verbindungselement (19) in die zweite Öffnung (21) des Tragarmes (15) sowie die erste Öffnung (141) des Halterungsteils (14) eingesetzt ist, wobei das Verbindungselement (19) ein mit dem Eingriffsstück (10) des Federelements (9) in Eingriff befindliches Ende aufweist sowie ein entgegengesetztes Ende des Eingriffsstücks (19) mit dem zweiten Kugelelement (18) verbunden ist, das Verbindungselement (19) das zweite Kugelelement (18), den Tragarm (15) sowie das Halterungsteil (14) am zweiten Basisteil (5) über das Federelement (9) lagert, die Baueinheit des Rückspiegel-Bausatzes durch das Verbindungselement (19) vereinigt sowie am ersten Basisteil (3) angebaut wird.

2. Rückspiegel-Bausatz nach Anspruch 1, dadurch gekennzeichnet, daß das zweite Winkelstück (307) des ersten Basisteils (3) einen Sperrhaken (306) aufweist und das zweite Basisteil (5) der Baueinheit eine Rastvertiefung (509), in die der Sperrhaken (306) des zweiten Winkelstücks (307) des ersten Basisteils (3) eingesetzt ist, hat, wobei der Sperrhaken (306) des zweiten Winkelstücks (307) des ersten Basisteils (3) eine Trennung des zweiten Basisteils (5) vom zweiten Winkelstück (307) des ersten Basisteils (3) verhindert.

3. Rückspiegel-Bausatz nach Anspruch 2, dadurch gekennzeichnet, daß das erste Winkelstück (305) des ersten Basisteils (3) eine zur Innenseite des ersten Basisteils (3) sich erstreckende Platte hat und das zweite Basisteil (5) der Baueinheit eine Einkerbung (510) aufweist, welche innerhalb einer Seitenfläche des zweiten Basisteils (5) abgegrenzt ist, wobei die Platte des ersten Basisteils in die Einkerbung (510) des zweiten Basisteils (5) eingesetzt ist.

4. Rückspiegel-Bausatz nach Anspruch 3, dadurch gekennzeichnet, daß die Einkerbung (510) des zweiten Basisteils (5) eine geneigte Innenfläche (511) hat, wobei die Platte des ersten Basisteils (3) entlang der geneigten Innenfläche (511) des zweiten Basisteils (5) abgebogen ist.

5. Rückspiegel-Bausatz nach Anspruch 3, dadurch gekennzeichnet, daß die Platte des ersten Winkelstücks (305) des ersten Basisteils (3) mit einem an ihr ausgebildeten Vorsprung (334) versehen ist und das zweite Basisteil (5) eine innerhalb seiner Einkerbung (510) angeordnete Innenfläche (532) hat, wobei der Vorsprung (334) der Platte des ersten Winkelstücks (305) mit der Innenfläche (532) des zweiten Basisteils (5) in Anlage ist.

6. Rückspiegel-Bausatz nach Anspruch 3, dadurch gekennzeichnet, daß die Platte des ersten Winkelstücks (305) des ersten Basisteils (5) an ihrer Frontseite einen ersten Anschlag (335) hat, wobei der erste Anschlag (335) der Platte des ersten Winkelstücks (305) das Einsetzen des zweiten Basisteils (5) über eine vorbestimmte Strecke hinaus am ersten Winkelstück (305) des ersten Basisteils (5) verhindert.

7. Rückspiegel-Bausatz nach Anspruch 2, dadurch gekennzeichnet, daß das zweite Winkelstück (307) des ersten Basisteils (3) einen zweiten Anschlag (336) hat, wobei der zweite Anschlag (336) des zweiten Winkelstücks (307) des ersten Basisteils (3) das Einsetzen des zweiten Basisteils (5) über eine vorbestimmte Strecke hinaus am zweiten Winkelstück (307) des ersten Basisteils (3) verhindert.

8. Rückspiegel-Bausatz nach Anspruch 2, dadurch gekennzeichnet, daß das erste Winkelstück (305) des ersten Basisteils (3) eine zur Innenseites des ersten Basisteils (3) sich erstreckende Platte hat und das zweite Basisteil (5) der Baueinheit einen an einer Seitenfläche des zweiten Basisteils (5) angeordneten Vorsprung aufweist, wobei der Vorsprung des zweiten Basisteils an der Platte des ersten Basisteils (3) gehalten ist.

9. Rückspiegel-Bausatz zum Anbau an einem Aufbauteil eines Fahrzeugs mit einem ersten, am Fahrzeug befestigten Basisteil (3) und einer Baueinheit des Rückspiegel-Bausatzes, dadurch gekennzeichnet, daß das erste Basisteil (3) ein Wandstück (313), einen ersten Flansch (314) sowie Klemmleisten (315) aufweist, daß das Wandstück (313) des ersten Basisteils (3) von einer Hauptplatte (311) des ersten Basisteils (3) ausgeht, daß der erste Flansch (314) des ersten Basisteils (3) sich von einer unteren Kante des Wandstücks (314) des ersten Basisteils (3) einwärts erstreckt, daß die Klemmleisten (315) in einer rückwärtigen Richtung des Fahrzeugs von beiden Enden des Wandstücks (313) des ersten Basisteils (3) aus verlaufen und daß die erste Baueinheit des Rückspiegel-Bausatzes umfaßt: ein zweites Basisteil (5) mit einem Befestigungsteil (271), mit einer ersten Platte (522) und mit einem Haken (6) an dieser, wobei eine Stirnseite des Befestigungsteils (271) des zweiten Basisteils (5) am ersten Flansch (314) des ersten Basisteils (3) gelagert und die erste Platte (522) an den Klemmleisten (315) des ersten Basisteils (3) gehalten ist, ein am Haken (6) des zweiten Basisteils (5) befestigtes Federelement (9), wobei das Federelement (9) eine Kappe (10) hat sowie einen vorbestimmen Anteil einer Kraft am Haken (6) des zweiten Basisteils (5) aufnimmt, ein an einem inneren Teil des Befesitungsteils (271) des zweiten Basisteils (5) angeordnetes Halterungsteil (14), wobei das Halterungsteil (14) eine erste Öffnung (141) sowie ein zweites Sockelteil (13) aufweist und die erste Öffnung (141) im Sockelteil (13) offen sowie an einer Fläche des Halterungsteils (14) angeordnet ist, einen Tragarm (15) mit einem ersten, einen ersten Kugelabschnitt (161), eine Innenumfangskante sowie ein zweites Sockelteil (162) aufweisenden Endstück (16) und mit einem zweiten, entgegengesetzten Endstück (24), an dem ein Rückspiegel drehbar zu lagern ist, wobei der erste Kugelabschnitt (161) des Tragarmes (15) an einer Außenfläche des ersten Endstücks (16) des Tragarmes (15) angeordnet ist, der erste Kugelabschnitt (161) gleitend am ersten Sockelteil (13) des Halterungsteils (14) gelagert ist, das zweite Sockelteil (162) an einer Innenfläche (532) des ersten Endstücks (16) des Tragarmes (15) angeordnet ist, die Innenumfangskante eine zweite Öffnung (21) innerhalb des ersten Endstücks (16) des Tragarmes (15) abgrenzt, die zweite Öffnung (21) durch das zweite Sockelteil (162) des Tragarmes (15) sowie den ersten Kugelabschnitt (161) des Tragarmes (15) verläuft und ein Durchmesser der zweiten Öffnung (21) größer ist als ein Durchmesser der ersten Öffnung (141) des Halterungsteils (14), ein zweites Kugelelement (18), das gleitend am zweiten Sockelteil (162) des Tragarmes (15) gelagert ist, wobei das zweite Kugelelement (18) mit einer dritten Öffnung (181) versehen ist, und ein Verbindungselement (19), das in die dritte Öffnung (181) des zweiten Kugelelements (18), die zweite Öffnung (21) des Tragarmes (15) und die erste Öffnung (141) des Halterungsteils (14) eingesetzt ist, wobei ein Ende des Verbindungselements (19) mit der Kappe (10) des Federelements (9) in Eingriff ist, ein entgegengesetztes Ende des Verbindungselements (19) ein Kopfstück aufweist, das das zweite Kugelelement (18), den Tragarm (15) und das Halterungsteil (14) am zweiten Basisteil (5) über das Federelement (9) lagert, die Baueinheit des Rückspiegel-Bausatzes durch das Verbindungselement (19) vereinigt und die Baueinheit des Rückspiegel-Bausatzes am ersten Basisteil (3) angebaut wird.

10. Rückspiegel-Bausatz für ein Fahrzeug mit einem ersten, an ein Aufbauteil des Fahrzeugs geklebten Basisteil (3) und einer Baueinheit des Rückspiegel-Bausatzes, dadurch gekennzeichnet, daß das erste Basisteil (3) ein Seitenteil mit einem ersten Winkelstück (305) sowie ein Frontteil mit einem zweiten Winkelstück (307) aufweist und die Baueinheit des Rückspiegel-Bausatzes umfaßt: ein zweites, am ersten Winkelstück (305) sowie am zweiten Winkelstück (307) des ersten Basisteils (3) gehaltenes Basisteil (5), wobei das zweite Basisteil (5) einen Haken (6) sowie ein Befestigungsteil (271) an diesem aufweist, ein am Haken (6) des zweiten Basisteils (5) gehaltenes Federelement (9) mit einem ersten Eingriffsstück (10) an diesem, wobei das Federelement (9) imstande ist, einen vorbestimmten Anteil einer abwärts gerichteten vertikalen Kraft am Haken (6) des zweiten Basisteils (5) aufzunehmen, ein am Befestigungsteil (271) des zweiten Basisteils (5) angeordnetes Halterungsteil (33), wobei das Halterungsteil (33) eine erste Öffnung (34) sowie einen ersten Kugelabschnitt (32) aufweist, der erste Kugelabschnitt (32) rund um die erste Öffnung (34) herum und an einer unteren Fläche des Halterungsteils (33) angeordnet ist, einen Tragarm (15) mit einer Außenfläche (351), einer Innenfläche und einer an einem Ende (35) von dieser befindlichen Innenumfangskante, wobei die Außenfläche (351) des Tragarmes (15) gleitend am ersten Kugelabschnitt (32) des Halterungsteils (33) gelagert ist, die Innenfläche des Tragarmes (15) einen zweiten Kugelabschnitt (352) hat, die Innenumfangskante eine zweite Öffnung (37) innerhalb des Endstücks (35) des Tragarmes (15) abgrenzt, die zweite Öffnung (37) des Tragarmes (15) sich vom zweiten Kugelabschnitt (352) der Innenfläche zur Außenfläche (351) des Tragarmes (15) erstreckt und ein Durchmesser der zweiten Öffnung (37) größer ist als ein Durchmesser der ersten Öffnung des Halterungsteils (33), einen drehbar an einem entgegengesetzten Endstück (24) des Tragarmes (15) gelagerten Rückspiegel (25), ein erstes Sockelteil (40), das gleitend am zweiten Kugelabschnitt (352) des Tragarmes (15) gelagert ist, und ein in die zweite Öffnung (37) des Tragarmes (15) sowie die erste Öffnung (34) des Halterungsteils (33) eingesetztes Verbindungselement (38), wobei ein Ende des Verbindungselements (38) mit dem ersten Eingriffsstück (10) des Federelements (9) in Eingriff und ein entgegengesetztes Ende des Verbindungselements (38) mit dem ersten Sockelteil (40) verbunden ist, das Verbindungselement (38) das erste Sockelteil (40), den Tragarm (15) sowie das Halterungsteil (33) am zweiten Basisteil (5) über das Federelement (9) lagert und die Baueinheit des Rückspiegel-Bausatzes durch das Verbindungselement (38) vereinigt sowie am ersten Basisteil (3) angebaut wird.

**Revendications**

1. Un ensemble de rétroviseur pour véhicule comprenant un premier élément de base (3) fixé au véhicule, et une unité de rétroviseur, caractérisé en ce que le premier élément de base (3) présente une partie latérale munie d'un premier rebord (305) et une partie frontale munie d'un deuxième rebord (307), et l'unité de rétroviseur comprend un deuxième élément de base (5) monté sur les premier et second rebords (305, 307) du premier élément de base (3), le deuxième élément de base (5) présentant un crochet (6) et une partie de fixation (271) sur celui-ci un organe élastique (9) monté sur le crochet (6) du deuxième élément de base (5) et présentant un moyen d'enclenchement (10) sur celui-ci, l'organe élastique (9) supportant une valeur prédéterminée d'une force sur le crochet (6) du deuxième élément de base (5), un élément de montage (14) présentant une première surface (272) disposée sur la partie de fixation (271) du deuxième élément de base (5), l'élément de montage (14) présentant une première ouverture (141) et une première partie de socle (13) disposée autour de la première ouverture (141) sur une deuxième surface opposée de l'élément de montage (14), un bras de support (15) présentant une première extrémité (16) munie d'une surface externe (161), d'une surface interne et d'un bord périphérique interne, et une seconde extrémité opposée (24) sur laquelle est susceptible d'être monté un rétroviseur (25) capable de tourner, la surface externe (161) du bras de support (15) étant montée de façon glissante sur la première partie de socle (13) de l'élément de montage (14), la surface interne du bras de support (15) présentant une deuxième partie de socle (162), le bord périphérique interne définissant une deuxième ouverture (21) s'étendant depuis la deuxième partie de socle (162) de la surface interne jusqu'à la surface externe (161) du bras de support (15), le diamètre de la deuxième ouverture (21) du bras de support (15) étant supérieur au diamètre de la première ouverture (141) de l'élément de montage (14), un deuxième élément sphérique (18) monté de façon glissante sur la deuxième partie de socle (162) de la surface interne du bras de support (15), et un élément d'enclenchement (19) introduit dans le deuxième ouverture (21) du bras de support (141) de l'élément de montage (14), l'élément d'enclenchement (19) comportant une extrémité s'enclenchant sur le dispositif d'enclenchement (10) de l'organe élastique (9) et une extrémité opposée de l'élément d'enclenchement (19) étant reliée au deuxième élément de sphère (18), l'élément d'enclenchement (19) supportant le deuxième élément de sphère (18), le bras de support (15) et l'élément de montage (14) sur le deuxième élément de base (5) par l'intermédiaire de l'organe élastique (9), l'unité de rétroviseur étant assemblé par l'élément d'enclenchement (19) et installé sur le premier élément de base (3).

2. Un ensemble de rétroviseur selon la revendication 1, caractérisé en ce que le deuxième rebord (307) du premier élément de base (3) comporte un cliquet (306) et le deuxième élément de base (5) de l'unité est muni d'une cavité d'enclenchement (509) dans laquelle est introduit le cliquet (306) du deuxième rebord (307) du premier élément de base (3), ledit cliquet empêchant le deuxième élément de base (5) de se séparer du deuxième rebord (307) du premier élément de base (3).

3. Un ensemble de rétroviseur selon la revendication 2, caractérisé en ce que le premier rebord (305) du premier élément de base (3) comporte une plaque qui s'étend à l'intérieur du premier élément de base (3) et le deuxième élément de base (5) de l'ensemble présente un vide (510) qui est défini à l'intérieur d'une surface latérale du deuxième élément de base (5), de manière que la plaque du premier élément de base (3) soit introduite dans le vide (510) du deuxième élément de base (5).

4. Un ensemble de rétroviseur selon la revendication 3, caractérisé en ce que le vide (510) du deuxième élément de base (5) comporte une surface interne inclinée (511), de manière que la plaque du premier élément de base (3) soit incurvée le long de la surface interne inclinée (511) du deuxième élément de base (5).

5. Un ensemble de rétroviseur selon la revendication 3, caractérisé en ce que la plaque du premier rebord (305) du premier élément de base (3) comporte une saillie (334) et le deuxième élément de base (5) comporte une surface interne (532) qui est disposée à l'intérieur du vide (510), de manière que la saillie (334) de la plaque du premier rebord (305) vienne en contact avec la surface interne (532) du deuxième élément de base (5).

6. Un ensemble de rétroviseur selon la revendication 3, caractérisé en ce que la plaque du premier rebord (305) du premier élément de base (3) comporte une première butée (335) sur l'une de ses extrémités frontales, de manière que la première butée (335) de la plaque du premier rebord (305) empêche le deuxième élément de base (5) d'être introduit audelà d'une distance prédéterminée sur le premier rebord (305) du premier élément de base (3).

7. Un ensemble de rétroviseur selon la revendication 2, caractérisé en ce que le deuxième rebord (307) du premier élément de base (3) comporte une seconde butée (336), de manière que la seconde butée (336) du deuxième rebord (307) du premier élément de base (3) empêche le deuxième élément de base (5) d'être introduit audelà d'une distance prédéterminée sur le deuxième rebord (307) du premier élément de base (3).

8. Un ensemble de rétroviseur selon la revendication 2, caractérisé en ce que le premier rebord (305) du premier élément de base (3) comporte une plaque qui s'étend à l'intérieur du premier élément de base (3) et le seconde élément de base (5) de l'ensemble comporte une saillie qui est disposée sur une surface latérale du deuxième élément de base (5), de manière que la saillie du deuxième élément de base (5) soit montée sur la plaque du premier élément de base (3).

9. Un ensemble de rétroviseur destiné à être installé sur la carosserie d'un véhicule et comprenant un premier élément de base (3) fixé au véhicule et une unité de rétroviseur, caractérisé en ce que le premier élément de base (3) comporte une paroi (313), un premier rebord (314) et des pattes de serrage (315), la paroi (313) du premier élément de base (3) s'étendant depuis une plaque principale (311) du premier élément de base (3), le premier rebord (314) du premier élément de base (3) s'étendant vers l'intérieur depuis un bord inférieur de la paroi (313) du premier élément de base (3), les pattes de serrage (315) s'étendant vers l'arrière du véhicule depuis les deux extrémités de la paroi (313) du premier élément de base (3), et en ce que le premier ensemble du rétroviseur comprend: un deuxième élément de base (5) muni d'une partie de montage (271), une première plaque (522) et un crochet (6) sur celle-ci, une partie frontale de la partie de montage (271) du second élément de base (5) étant fixée sur le premier rebord (314) du premier élément de base (3), la première plaque (522) étant montée sur les pattes de serrage (315) du premier élément de base (3), un organe élastique (9) monté sur le crochet (6) du second élément de base (5) l'organe élastique (9) comportant un chapeau (10) et supportant une quantité prédéterminée d'une force exercée sur le crochet (6) du second élément de base (5), un élément de montage (14) disposé sur une partie intérieure de la partie de montage (271) du deuxième élément de base (5), l'élément de montage (14) présentant une première ouverture (141) et une première partie de socle (13), la première ouverture (141) étant ouverte dans la première partie de socle (13) et disposée sur une surface de l'élément de montage (14), un bras de support (15) dont une première extrémité (16) comporte une première partie de sphère (161), un bord périphérique interne et une deuxième partie de socle (162), et une seconde extrémité opposée (24) sur laquelle est susceptible d'être monté à rotation un rétroviseur, la première partie de sphère (161) du bras de support (15) étant disposée sur une surface externe de la première extrémité (16) du bras de support (15), la première parte de sphère (161) étant montée à glissement sur la première partie de socle (13) de l'élément de montage (14), la seconde partie de socle (162) étant disposée sur une surface interne (532) de la première extrémité (16) du bras de support (15), le bord périphérique interne définissant une seconde ouverture (21) à l'intérieure de la première extrémité (16) du bras de support (15), la seconde ouverture (21) s'étendant à travers la deuxième partie de socle (162) du bras de support (15) et la première sphérique (161) du bras de support (15), le diamètre de la seconde ouverture (21) étant supérieur au diamètre de la première ouverture (141) de l'élément de montage (14), un second élément de sphère (18) étant monté à glissement sur la deuxième partie de socle (162) du bras de support (15), le second élément de sphère (18) comportant une troisième ouverture (181) et un élément d'enclenchement (19) étant inséré dans la troisième ouverture (181) du second élément de sphère (18), dans la seconde ouverture (21) du bras de support (15) et dans la première ouverture (141) de l'élément de montage (14), une extrémité de l'élément d'enclenchement (19) s'enclenchant avec le chapeau (10) de l'organe élastique (9), une extrémité opposée de l'élément d'enclenchement (19) comportant une partie de tête qui supporte le second élément de sphère (18), le bras de support (15) et l'élément de montage (14) sur le deuxième élément de base (5) par l'intermédiaire de l'organe élastique (9), l'ensemble de rétroviseur étant assemblée par l'élément d'enclenchement (19) et l'unité de rétroviseur étant installée sur le premier élément de base (3).

10. Un ensemble de rétroviseur pour un véhicule comprenant un premier élément de base (3) collé à un élément de carosserie du véhicule, et une unité de rétroviseur, caractérisé en ce que le premier élément de base (3) comporte une partie latérale munie d'un premier rebord (305) et une partie frontale munie d'un second rebord (307), et en ce que l'unité de rétroviseur comporte un second élément de base (5) monté sur le premier rebord (305) et sur le second rebord (307) du premier élément de base (3), le second élément de base (5) présentant un crochet (6) et une partie de montage (271) sur celui-ci, un organe élastique (9) monté sur le crochet (6) du second élément de base (5) et présentant un premier dispositif d'enclenchement (10) sur celui-ci, l'organe élastique (9) étant capable de supporter une quantité prédéterminée d'une force verticale dirigée vers le bas sur le crochet (6) du second élément de base (5), un élément de montage (33) étant disposé sur la partie de montage (271) du second élément de base (5), l'élément de montage (33) comportant une première ouverture (34) et une première partie de sphère (32) disposée autour de ladite première ouverture (34), la première partie de sphère (32) étant disposée sur une surface de fond de l'élément de montage (33), un bras de support (15) présentant une surface externe (351), une surface interne et un bord périphérique interne disposé sur l'une de ses extrémités (35), la surface externe (351) du bras de support (15) étant montée à glissement sur la première partie de sphère (32) de l'élément de montage (33), la surface interne du bras de support (15) comportant une seconde partie de sphère (352), le bord périphérique interne définissant une seconde ouverture (37) à l'intérieur de l'extrémité (35) du bras de support (15), la seconde ouverture (37) du bras de support (15) s'étendant depuis la seconde partie de sphère (352) de la surface interne jusqu'à la surface externe (351) du bras de support (15), le diamètre de la seconde ouverture (37) étant supérieur au diamètre de la première ouverture (34) de l'élément de montage (33), un miroir de rétroviseur (25) étant monté à rotation sur une extrémité opposée (24) du bras de support (15), un premier élément de socle (40) étant monté à glissement sur la seconde partie de socle (352) du bras de support (15) et un élément d'enclenchement (38) étant inséré dans la deuxième ouverture (37) du bras de support (15) et dans la première ouverture (34) de l'élément de montage (33), l'élément d'enclenchement (38) comportant une extrémité s'enclenchant sur le premier dispositif d'enclenchement (10) de l'organe élastique (9), et une extrémité opposée de l'élément d'enclenchement (38) étant reliée au premier élément de socle (40), l'élément d'enclenchement (38) supportant le premier élément de socle (40), le bras de support (15) et l'élément de montage (33) sur le second élément de base (5) par l'intermédiaire de l'organe élastique (9), l'unité de rétroviseur étant assemblée par l'élément d'enclenchement (38) et installée sur le premier élément de base (3).

Fig. 1

1

# Fig. 2

EP 0 169 733 B1

# Fig. 3

3

# Fig. 4

# Fig. 5

# Fig. 6

# Fig. 7

## Fig.  8

Fig. 9

# Fig. 10

# Fig. 11

Fig. 12

EP 0 169 733 B1

Fig. 13